# EUROPEAN PATENT APPLICATION

(11) **EP 4 566 893 A1**
(43) Date of publication of application: **11.06.2025**
(21) Application number: 23849677.2
(22) Date of filing: 14.02.2023
(51) Int. Cl.: B60R 16/04

(54) **WORK VEHICLE**

(30) Priority: 03.08.2022 JP 2022124179
(71) Applicant: Kubota Corporation, Osaka 556-8601 (JP)
(72) Inventor: SHIMOIKE, Yuki, Sakai-shi, Osaka 590-0908 (JP); OKAZAKI, Kazuto, Sakai-shi, Osaka 590-0908 (JP); KAWABATA, Shinichi, Sakai-shi, Osaka 590-0908 (JP)
(74) Representative: Müller-Boré & Partner Patentanwälte PartG mbB
(86) International application number: PCT/JP2023/004877
(87) International publication number: WO 2024/029109

(57) **Abstract**

An upper surface portion 14a of a battery 14 is provided with a recessed portion 27 and a lid member 28 configured to open and close the recessed portion 27. A service plug 20 is accommodated in the recessed portion 27 and is covered from above by the lid member 28.

## Description

### Technical Field

The present invention relates to a work vehicle.

### Background Art

As shown in Patent Document 1, there is a work vehicle (electric tractor) that includes an electric motor that drives a travel device, a battery room formed by an openable and closable cover member (hood), and a battery that is provided in the battery room and supplies power to the electric motor.

### Prior Art Document

### Patent Document

Patent Document 1: JP 2022-60665A

### Disclosure of the Invention

### Problem to be Solved by the Invention

The above-described work vehicle includes a service plug configured to shut off a power source circuit that uses the battery as a power source. However, if the service plug is operated by mistake, the power source circuit will be shut off and the travel device will not be able to be driven.

The present invention provides a work vehicle including a service plug that is not likely to be operated by mistake and is not likely to be soiled by mud and the like.

### Means for Solving Problem

A work vehicle according to the present invention includes: an electric motor configured to drive a travel device; a battery room formed by an openable and closable cover member; a battery provided in the battery room and configured to supply power to the electric motor; and a service plug configured to shut off a power source circuit that uses the battery as a power source, in which a recessed portion and a lid member configured to open and close the recessed portion are provided on an upper surface portion of the battery, and the service plug is accommodated in the recessed portion and is covered from above by the lid member.

According to this configuration, the service plug is in the recessed portion of the battery and is covered and hidden by the lid member. Therefore, the service plug can be made less likely to be operated by mistake. Since mud and the like that is splashed up by the travel device is not likely to reach the upper surface portion of the battery where the recess is, the service plug can be made less likely to be soiled by mud and the like.

In the present invention, it is preferable that the cover member is supported in such a manner as to be swingable up and down to be opened and closed using, as a swing support point, an opening and closing axis that is at an end portion on a body rearward side of the cover member and extends along a body lateral direction, and the end portion on the body rearward side of the opening of the recessed portion is below the opening and closing axis.

According to this configuration, an interval between the cover member and the opening when the cover member is opened is narrower than in a case where the opening is on a body frontward side relative to the opening and closing axis. That is, even if the cover member is opened, the interval between the cover member and the lid member is narrow, and therefore the service plug can be made less likely to be operated by mistake.

In the present invention, it is preferable that the opening is non-circular, and a peripheral edge of the opening includes a first peripheral edge portion that corresponds to the end portion on the body rearward side of the opening and extends in the body lateral direction along the opening and closing axis, and the peripheral edge of the opening includes a second peripheral edge portion that corresponds to an end portion on a body frontward side of the opening and extends in the body lateral direction parallel to the first peripheral edge portion.

According to this configuration, compared to a case where the opening is circular, the opening can be made wider while preventing the interval between the cover member and the opening from becoming too wide when the cover member is opened. Therefore, it is easier to operate the service plug when it is necessary to shut off the power source circuit.

In the present invention, it is preferable that the opening has an octagonal shape.

According to this configuration, the area of the part of the opening on the body frontward side relative to the opening and closing axis can be made larger, and therefore it is easier to operate the service plug.

In the present invention, it is preferable that both sides of the opening include screw members configured to fasten the lid member to the upper surface portion, and the screw members are provided on a body front side relative to the opening and closing axis.

According to this configuration, the screw members can be operated at a location on the body front side relative to the opening and closing axis, that is, at a location where the cover member is unlikely to interfere with operation, and therefore it is easier to operate the screw members.

In the present invention, it is preferable that a power source fuse is provided adjacent to the service plug.

According to this configuration, while performing maintenance work such as inspection of the fuse, the fuse and the service plug are close to each other, making it easier to operate the service plug. Therefore, it is easier to shut off the power source circuit.

In the present invention, it is preferable that the fuse is on the body front side relative to the service plug.

According to this configuration, since it is possible to inspect the fuse and the like on the body front side relative to the service plug, it is easier to perform maintenance work on the fuse.

In the present invention, it is preferable that the upper surface portion is provided with a second recessed portion separate from the recessed portion, and a second lid member that is configured to open and close the second recessed portion and is separate from the lid member, and the fuse is accommodated in the second recessed portion and is covered from above by the second lid member.

According to this configuration, when the service plug is operated, the fuse can be kept covered by the second lid member and the fuse can be prevented from being touched.

In the present invention, it is preferable to include a hexalobular screw configured to fasten the second lid member to the upper surface portion.

According to this configuration, since the second lid member is fastened to the top surface portion by the hexalobular screw, which is difficult to operate, the fuse can be made less likely to be operated by mistake.

### Brief Description of the Drawings

FIG. 1 is a side view of an electric tractor.
FIG. 2 is a plan view of the electric tractor.
FIG. 3 is a plan view showing a service plug, a fuse, a first recessed portion in an open state, and a second recessed portion in an open state.
FIG. 4 is a plan view showing the first recessed portion in a closed state and the second recessed portion in a closed state.
FIG. 5 is a cross-sectional view taken along line V-V of FIG. 3.
FIG. 6 is a cross-sectional view taken along line VI-VI of FIG. 3.
FIG. 7 is a perspective view of a second coupling bolt.
FIG. 8 is a perspective view of a hexalobular screw.
FIG. 9 is a plan view showing a first recessed portion of another embodiment.

### Best Mode for Carrying out the Invention

An embodiment of an electric tractor, which is an example of a work vehicle according to the present invention, will be described below with reference to the drawings.

### [Overall Configuration]

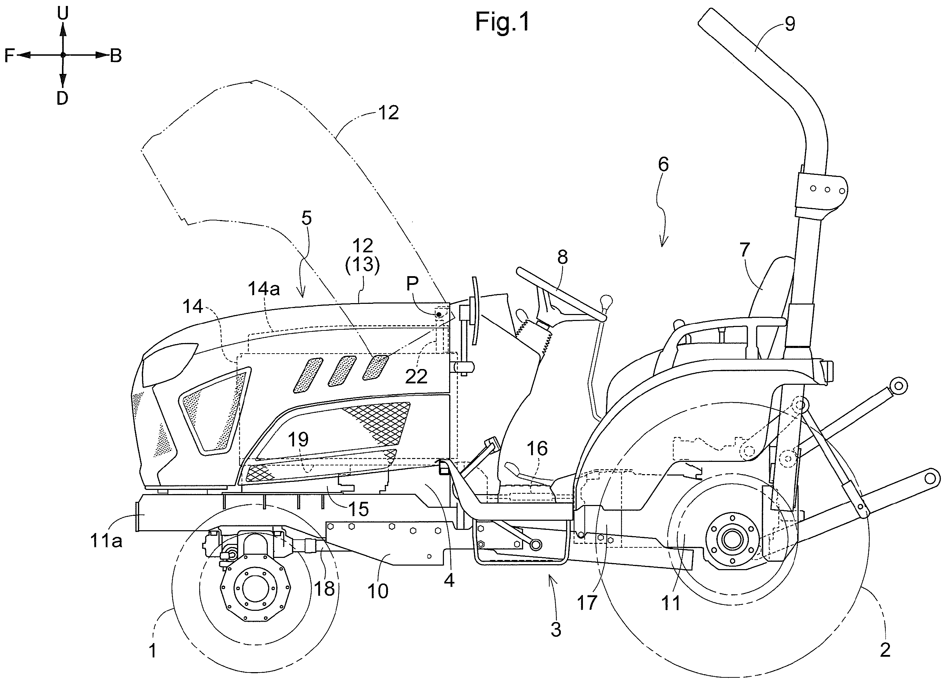

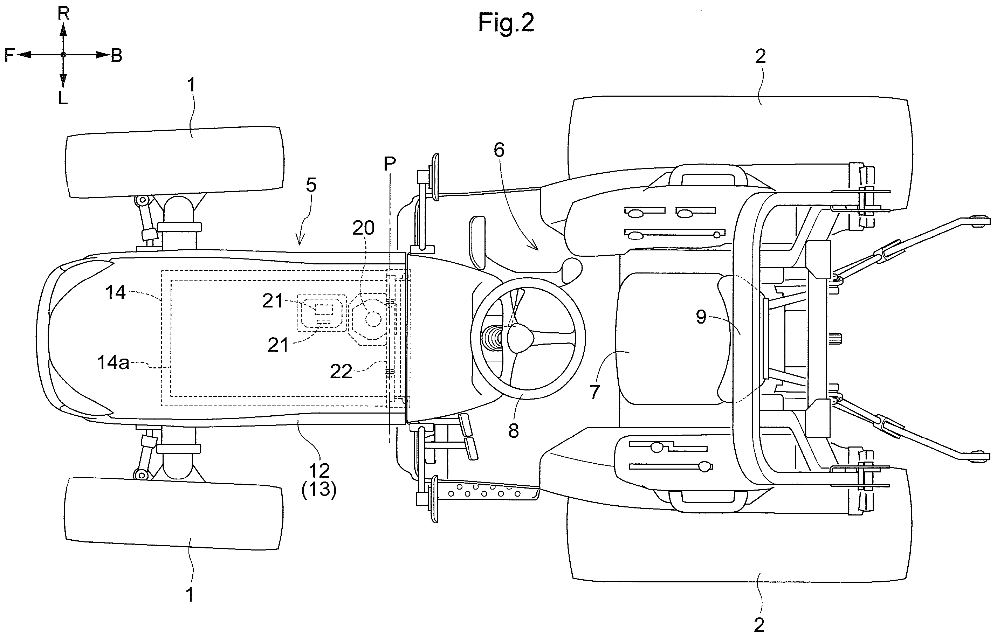

An electric tractor is shown in FIGS. 1 and 2. This electric tractor is included in various types of working machines, such as a riding tiller formed by coupling a rotary tilling device (not shown) to the body rear portion, or a riding grass cutter formed by coupling a grass cutting device (not shown) to the body lower portion.

The front-rear direction of the travel body of the electric tractor is defined along the body forward travel direction when in the working state, and the left-right direction of the travel body is defined as viewed in the forward travel direction of the travel body. That is, the direction indicated by the symbol (F) in FIGS. 1, 2, and the like is a body front side, and the direction indicated by the symbol (B) in FIGS. 1, 2, and the like is a body rear side. The direction indicated by the symbol (L) in FIG. 2 and the like is a body left side, and the direction indicated by the symbol (R) in FIG. 2 and the like is a body right side. Accordingly, the body left-right direction corresponds to a body lateral direction. In addition, the direction indicated by the symbol (U) in FIG. 1 and the like is a body upper side, and the direction indicated by the symbol (D) in FIG. 1 and the like is a body lower side.

The electric tractor includes a travel body 3 supported by steerable and drivable front wheels 1 serving as a pair of left and right travel devices, and drivable rear wheels 2 serving as a pair of left and right travel devices. A motor section 5 including an electric motor 4 for driving the front wheels 1 and the rear wheels 2 is provided at a front portion of the travel body 3. A driving section 6 in which an operator sits is provided at a rear portion of the travel body 3. The driving section 6 includes a driver's seat 7, a steering wheel 8 for steering the front wheels 1, and a ROPS 9 serving as a driver protection device. A body frame 10 includes, for example, a front frame 11a that supports the front wheels 1 and the like, and a transmission case 11 whose front portion is coupled to the rear portion of the front frame 11a and that supports the rear wheels 2 and the like.

### [Motor Section]

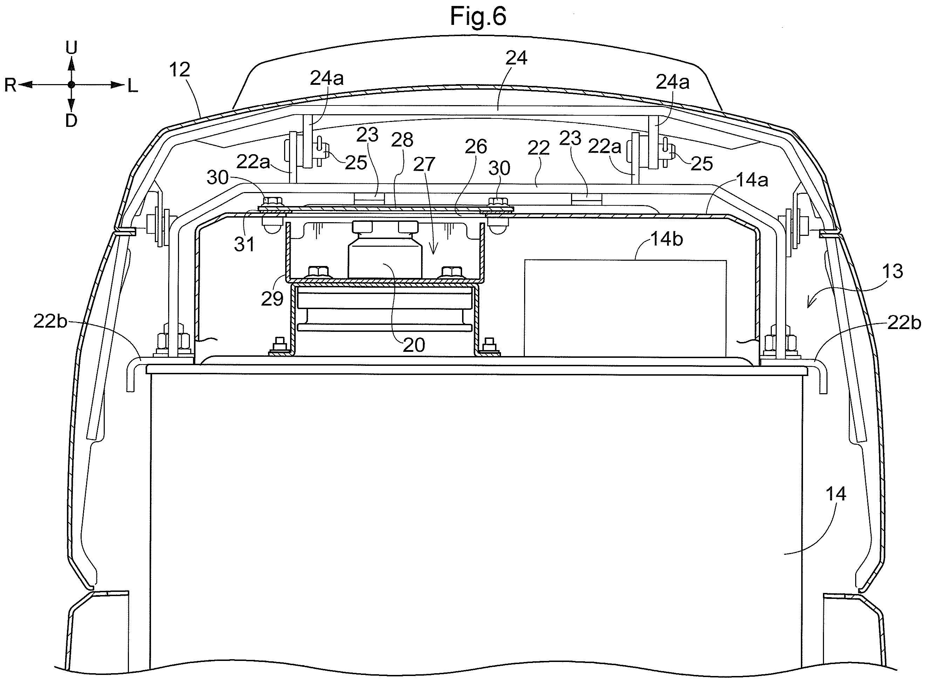

As shown in FIGS. 1, 2, and 6 , the motor section 5 includes a battery room 13 formed by a cover member 12. The battery room 13 is provided with a battery 14. The electric motor 4 that drives the front wheels 1 and the rear wheels 2 and an inverter 15 that converts DC power from the battery 14 into AC power and supplies the AC power to the electric motor 4 are provided below the battery 14. The electric motor 4 and the inverter 15 are arranged in the body front-rear direction with the electric motor 4 on the body rearward side relative to the inverter 15.

The electric motor 4 is supported by the front frame 11a. The output of the electric motor 4 is input to a hydrostatic continuously variable transmission 17 (see FIG. 1) provided at a front portion of the transmission case 11 via a rotary shaft 16 (see FIG. 1) extending from the electric motor 4 toward the body rear side, and is then input from the continuously variable transmission 17 to the transmission case 11. The input power is transmitted to a driving transmission (not shown) and then transmitted from the driving transmission to the rear wheels 2 and the front wheels 1. Power is transmitted from the driving transmission to the front wheels 1 via a rotary shaft 18 extending from the transmission case 11 toward the body front.

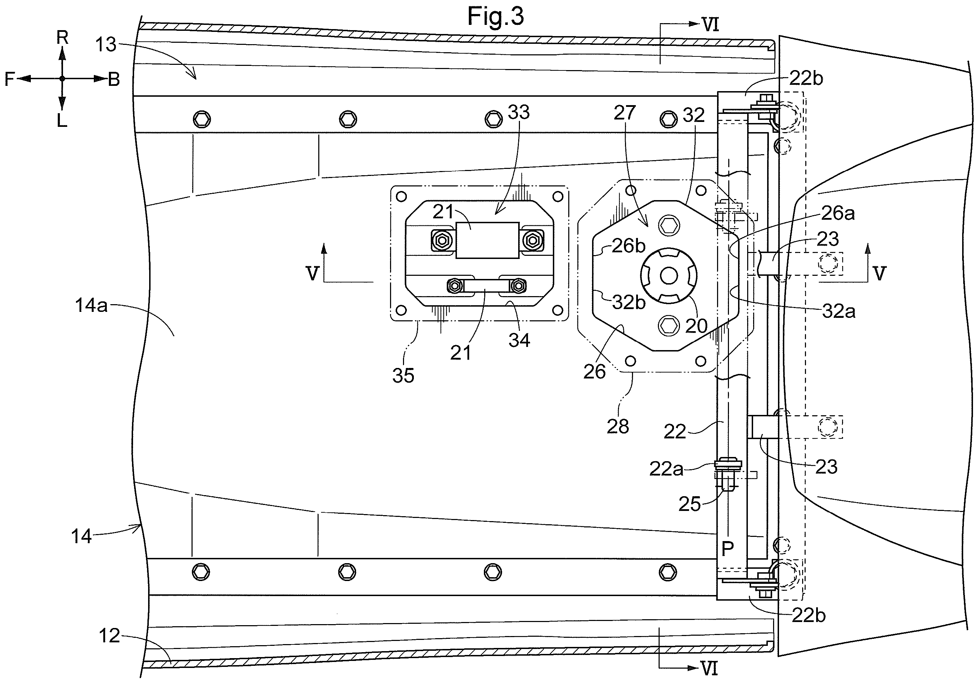

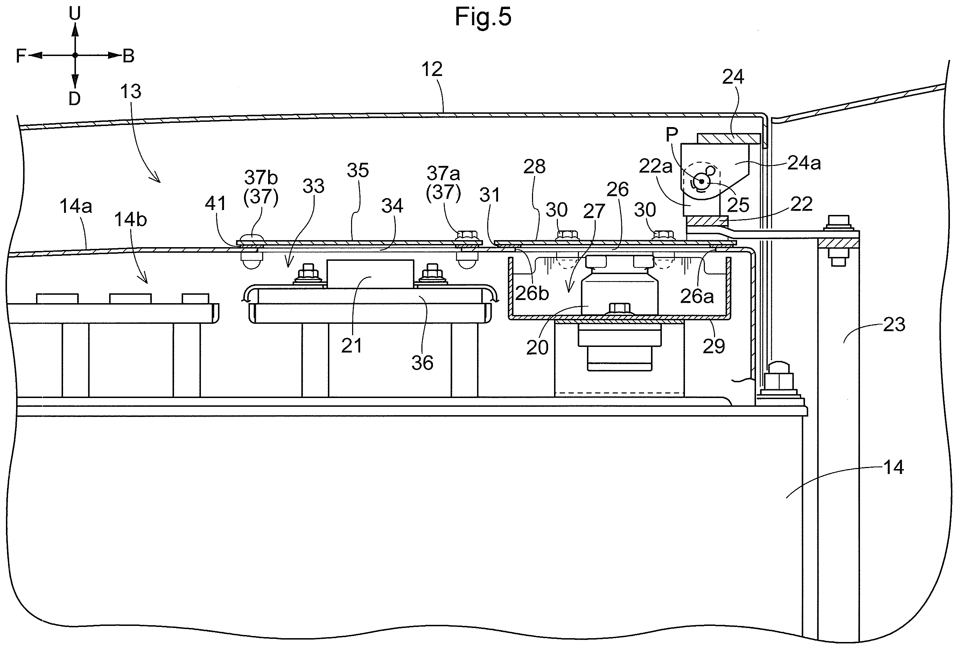

The battery 14 is placed on a battery placement platform 19 (see FIG. 1) supported by the front frame 11a. The battery 14 is provided with a service plug 20 (see FIGS. 3 and 5) and two fuses 21 (see FIGS. 3 and 5) by which a power source circuit that uses the battery 14 as a power source can be shut off. The inverter 15 is supported by the front frame 11a below the battery placement platform 19.

As shown in FIGS. 1 and 2, the cover member 12 has an opening and closing axis P that is at the end portion on the body rearward side of the cover member 12 and extends in the body lateral direction, and the cover member 12 is supported by a support frame 22 while being swingable up and down to be opened and closed, with the opening and closing axis P serving as a swing support point.

Specifically, as shown in FIGS. 3, 5, and 6, the support frame 22 has a gate shape as viewed from the front, the gate shape surrounding the upper portion of the rear end portion of the battery 14, and the support frame 22 is supported by the front frame 11a via support members 23 provided across intermediate portions of the support frame 22 and the front frame 11a. Both end portions 22b of the support frame 22 are engaged with lateral end portions of the battery 14 and are supported by the battery 14. A reinforcing member 24 is coupled to the inside of the end portion on the body rearward side of the cover member 12. The reinforcing member 24 has two coupling portions 24a provided at the left and right sides thereof, and the coupling portions 24a are supported in such a manner as to be rotatable via support point shafts 25 by supporting portions 22a provided at the left and right sides of the support frame 22. The axis of the support point shaft 25 corresponds to the opening and closing axis P.

### [Service Plug]

As shown in FIGS. 1, 5, and 6, the battery 14 includes an upper cover portion 14a provided on the upper portion of the battery 14. The upper cover portion 14a is configured to cover an electric circuit portion 14b of the battery 14.

As shown in FIGS. 3, 4, and 5, a first recessed portion 27 having a first opening 26 and a first lid member 28 that opens and closes the first recessed portion 27 by opening and closing the first opening 26 are provided at the end portion on the body rearward side of the upper cover portion 14a, which serves as the upper surface portion of the battery 14. A box-shaped member 29 that forms a peripheral wall and a bottom wall of the first recessed portion 27 is provided inside the upper cover portion 14a. The service plug 20 configured to shut off a power source circuit that uses the battery 14 as a power source is accommodated in the first recessed portion 27 and is covered from above by the first lid member 28.

In this embodiment, the first recessed portion 27 is provided at the end portion on the body rearward side of the upper cover portion 14a, but it can also be provided at any part of the upper cover portion 14a, such as the end portion on the body frontward side of the upper cover portion 14a, or the center in the body front-rear direction of the upper cover portion 14a.

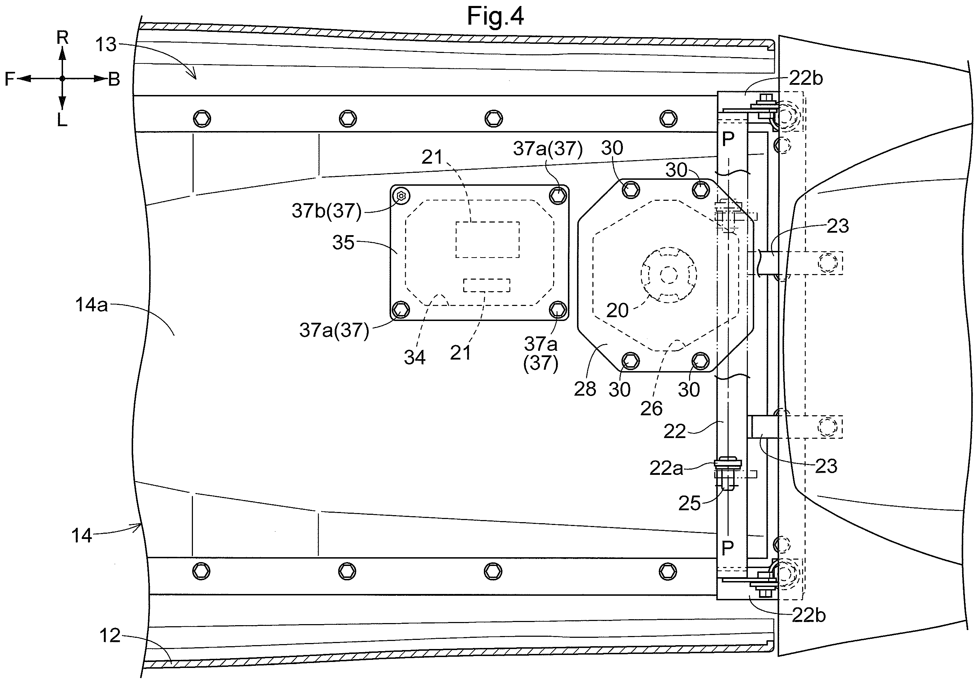

As shown in FIG. 4, the first lid member 28 is configured to be attached to and detached from the upper cover portion 14a by first coupling bolts 30 serving as four first screw members. Specifically, two of the four first coupling bolts 30 are configured to fasten and couple the first lid member 28 to the upper cover portion 14a by engaging with the part on the left side of the first opening 26 in the upper cover portion 14a. The other two of the four first coupling bolts 30 are configured to fasten and couple the first lid member 28 to the upper cover portion 14a by engaging with the part on the right side of the first opening 26 in the upper cover portion 14a. The first coupling bolts 30 are engaged with the upper cover portion 14a by being engaged with screw hole members fixed to the underside of the upper cover portion 14a. A sealing gasket 31 (see FIG. 5) is interposed between the first lid member 28 and the upper cover portion 14a.

The service plug 20 is accommodated in the first recessed portion 27 and is covered and hidden by the first lid member 28 in such a manner as to prevent it from being operated by mistake and to prevent mud and the like splashed up by the front wheels 1 from adhering thereto. The service plug 20 can be removed upward through the first opening 26 by removing the first lid member 28 to open the first opening 26.

As shown in FIGS. 3 and 5, the first opening 26 is provided with an end portion 26a on the body rearward side of the first opening 26 located below the opening and closing axis P of the cover member 12. Compared to a case in which the first opening 26 is on the body frontward side relative to the opening and closing axis P, the interval between the cover member 12 and the first opening 26 when the cover member 12 is opened can be made narrower. That is, even if the cover member 12 is opened, the interval between the cover member 12 and the first lid member 28 is narrow. Therefore, the service plug 20 can be made more difficult to operate.

As shown in FIG. 3, the first opening 26 has an octagonal shape. A peripheral edge 32 of the first opening 26 includes a first peripheral edge portion 32a that corresponds to the end portion 26a on the body rearward side of the first opening 26 and extends along the opening and closing axis P in the body lateral direction. The peripheral edge 32 of the first opening 26 includes a second peripheral edge portion 32b that corresponds to an end portion 26b on the body frontward side of the first opening 26 and extends parallel to the first peripheral edge portion 32a in the body lateral direction. Compared to a case where the first opening is circular, the interval between the cover member 12 and the first opening 26 when the cover member 12 is opened can be made narrower, while the first opening 26 can be made wider so that the service plug 20 is easily operated.

As shown in FIG. 4, the four first coupling bolts 30 are provided on the body front side relative to the opening and closing axis P of the cover member 12. When opening and closing the first lid member 28, the first coupling bolts 30 can be operated at a location on the body frontward side relative to the opening and closing axis P, that is, at a location where the cover member 12 is unlikely to interfere with operation.

In this embodiment, two first coupling bolts 30 are provided on both sides of the first opening 26, but it is possible to provide three or more first coupling bolts 30 on both sides of the first opening 26. In this embodiment, the first coupling bolts 30 are used, but it is possible to use a bolt fixed to the upper cover portion 14a and a screw hole member that engages with this bolt to fasten the first lid member 28 to the upper cover portion 14a instead of the first coupling bolts 30.

### [Fuse]

As shown in FIG. 3, the two fuses 21 are provided in a part of the upper cover portion 14a of the battery 14 that is adjacent to the service plug 20. Since the two fuses 21 and the service plug 20 are close to each other, when performing maintenance work on the two fuses 21, it is easy to operate the service plug 20 and shut off the power source circuit.

Specifically, as shown in FIGS. 3 and 5, a second recessed portion 33 separate from the first recessed portion 27 is provided in a part of the upper cover portion 14a adjacent to the front of the first recessed portion 27. The second recessed portion 33 is provided with a second opening 34 separate from the first opening 26. The second recessed portion 33 is opened and closed by opening and closing the second opening 34 with a second lid member 35 separate from the first lid member 28. The two fuses 21 are accommodated in the second recessed portion 33 and are covered from above by a second lid member 35. The two fuses 21 can remain covered by the second lid member 35 while the service plug 20 is operated. The two fuses 21 are accommodated in the second recessed portion 33 by attaching the two fuses 21 to a fuse support platform 36 provided in the second recessed portion 33.

As shown in FIG. 4, the second lid member 35 is configured to be attached to and detached from the upper cover portion 14a by second coupling bolts 37 serving as four second screw members. Specifically, two of the four second coupling bolts 37 are configured to fasten and couple the second lid member 35 to the upper cover portion 14a by engaging with parts on both sides of the end portion on the body rearward side of the second opening 34 in the upper cover portion 14a. The other two of the four second coupling bolts 37 are configured to fasten and couple the second lid member 35 to the upper cover portion 14a by engaging with parts on both sides of the end portion on the body frontward side of the second opening 34 in the upper cover portion 14a. The second coupling bolt 37 is engaged with the upper cover portion 14a due to the second coupling bolts 37 engaging with screw hole members fixed to the underside of the upper cover portion 14a. A sealing gasket 41 (see FIG. 5) is interposed between the second lid member 35 and the upper cover portion 14a.

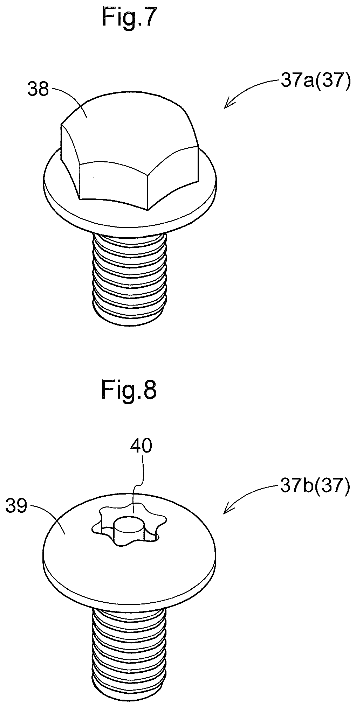

Three second coupling bolts 37a of the four second coupling bolts 37 are constituted by coupling bolts having hexagonal heads 38 as shown in FIG. 7. Another second coupling bolt 37b of the four second coupling bolts 37 is constituted by a hexalobular screw having a head 39 provided with a hexagonal attachment hole 40, as shown in FIG. 8. The hexalobular screw is used to fasten the end portion on the body frontward side of the second lid member 35, that is, the end portion farther from the opening and closing axis P of the cover member 12.

In this embodiment, four second coupling bolts 37 are provided. However, six or more second coupling bolts 37 can be provided. In this embodiment, the second coupling bolts 37 are used, but it is possible to use a screw shaft fixed to the upper cover portion 14a and a screw hole member that engages with this screw shaft to fasten the second lid member 35 to the upper cover portion 14a instead of the second coupling bolts 37.

### [Alternative Embodiments]

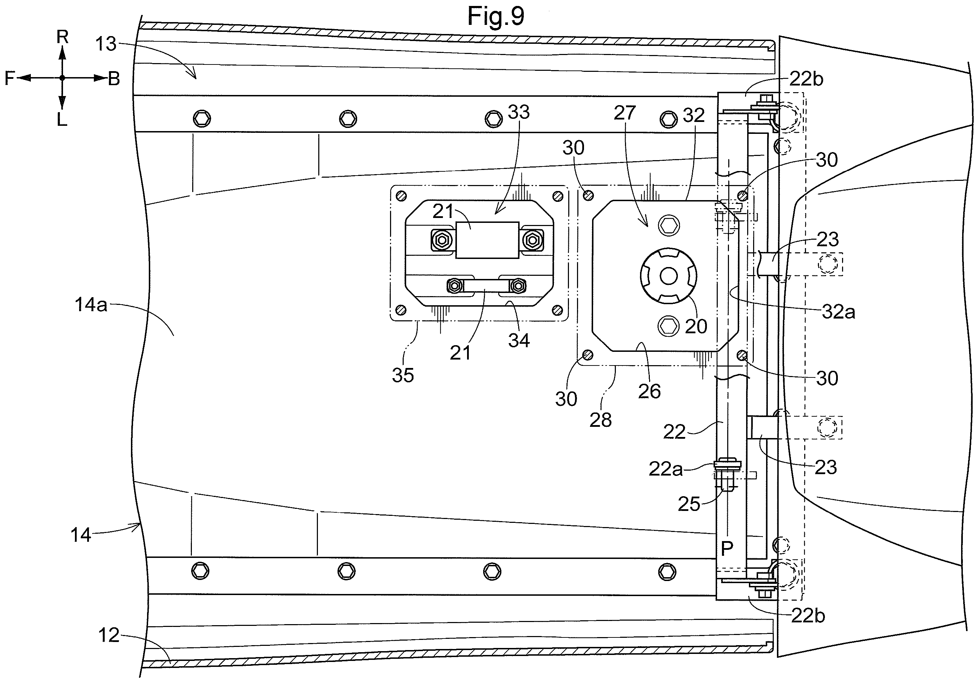

(1) FIG. 9 is a plan view showing a first recessed portion 27 of an alternative embodiment. In the first recessed portion 27 of the alternative embodiment, the first opening 26 of the first recessed portion 27 has a quadrangular shape. The peripheral edge 32 of the first opening 26 includes the first peripheral edge portion 32a that corresponds to one rearward side of the first opening 26 and is located below the opening and closing axis P along the opening and closing axis P. The first coupling bolts 30 for fastening and coupling the first lid member 28 are respectively attached to the upper cover portion 14a at locations corresponding to the four corners of the first opening 26. In this embodiment, the first opening 26 has a rectangular shape with four chamfered corners, but the corners need not be chamfered. Note that the non-circular shape of the first opening 26 is not limited to an octagonal shape or a quadrangular shape, and can have a hexagonal shape or the like.
(2) In the above embodiment, an example was shown in which the first recessed portion 27 was provided at the end portion on the body rearward side of the upper cover portion 14a. However, the first recessed portion 27 may be provided at any part of the upper cover portion 14a, such as the end portion on the body frontward side of the upper cover portion 14a or an intermediate portion in the body front-rear direction of the upper cover portion 14a.
(3) In the above embodiment, an example was shown in which the first opening 26 had an octagonal shape. However, the shape is not limited to this, and it is possible to employ a first opening that has a non-circular shape, such as a hexagonal shape.
(4) In the above embodiment, an example was shown in which two fuses 21 were provided. However, it is also possible to provide only one fuse or three or more fuses.
(5) In the above embodiment, an example was shown in which the fuse 21 was adjacent to the front of the service plug 20. However, the fuse 21 may also be adjacent to the side of the service plug 20.
(6) In the above embodiment, an example was shown in which the first recessed portion 27 and the second recessed portion 33 were provided separately from each other and the first lid member 28 and the second lid member 35 were provided separately from each other. However, there is no limitation to this. For example, the service plug 20 and the fuse 21 may also be accommodated in the same recessed portion. Also, the first recessed portion 27 and the second recessed portion 33 may be provided separately from each other, and the first opening 26 of the first recessed portion 27 and the second opening 34 of the second recessed portion 33 may be opened and closed by the same lid member.
(7) In the above embodiment, an example was shown in which a hexalobular screw was used, but a configuration in which a hexalobular screw is not used is also possible.
(8) In the above embodiment, an example was shown in which the front wheels 1 and the rear wheels 2 were provided, but a crawler travel device or a mini crawler may also be provided as the travel device.

### Industrial Applicability

The present invention can be applied to a work vehicle including an electric motor that drives a travel device, a battery room formed by an openable and closable cover member, and a battery that is provided in the battery room and supplies power to the electric motor.

### Description of Reference Signs

1: front wheel (travel device)
2: rear wheel (travel device)
4: electric motor
12: cover member
13: battery room
14: battery
14a: upper cover portion (upper surface portion)
20: service plug
21: fuse
26: first opening (opening)
26a: end portion
26b: end portion
27: first recessed portion (recessed portion)
28: first lid member (lid member)
30: first coupling bolt (screw member)
32: peripheral edge
32a: first peripheral edge portion
32b: second peripheral edge portion
33: second recessed portion
34: second opening
35: second lid member
37b: second coupling bolt (hexalobular screw)

## Claims

1. A work vehicle comprising:
an electric motor configured to drive a travel device;
a battery room formed by an openable and closable cover member;
a battery provided in the battery room and configured to supply power to the electric motor; and
a service plug configured to shut off a power source circuit that uses the battery as a power source,
wherein a recessed portion and a lid member configured to open and close the recessed portion are provided on an upper surface portion of the battery, and
the service plug is accommodated in the recessed portion and is covered from above by the lid member.

2. The work vehicle according to claim 1,
wherein the cover member is supported in such a manner as to be swingable up and down to be opened and closed using, as a swing support point, an opening and closing axis that is at an end portion on a body rearward side of the cover member and extends along a body lateral direction, and
the end portion on the body rearward side of the opening of the recessed portion is below the opening and closing axis.

3. The work vehicle according to claim 2,
wherein the opening is non-circular, and
a peripheral edge of the opening includes a first peripheral edge portion that corresponds to the end portion on the body rearward side of the opening and extends in the body lateral direction along the opening and closing axis, and the peripheral edge of the opening includes a second peripheral edge portion that corresponds to an end portion on a body frontward side of the opening and extends in the body lateral direction parallel to the first peripheral edge portion.

4. The work vehicle according to claim 2 or 3,
wherein the opening has an octagonal shape.

5. The work vehicle according to any one of claims 2 to 4,
wherein both sides of the opening include screw members configured to fasten the lid member to the upper surface portion, and
the screw members are provided on a body front side relative to the opening and closing axis.

6. The work vehicle according to any one of claims 1 to 5,
wherein a power source fuse is provided adjacent to the service plug.

7. The work vehicle according to claim 6,
wherein the fuse is on the body front side relative to the service plug.

8. The work vehicle according to claim 6 or 7,
wherein the upper surface portion is provided with a second recessed portion separate from the recessed portion, and a second lid member that is configured to open and close the second recessed portion and is separate from the lid member, and
the fuse is accommodated in the second recessed portion and is covered from above by the second lid member.

9. The work vehicle according to claim 8, further comprising
a hexalobular screw configured to fasten the second lid member to the upper surface portion.
